# EUROPEAN PATENT SPECIFICATION

(11) **EP 3 149 578 B1**
(45) Date of publication and mention of the grant of the patent: **27.11.2024**
(21) Application number: 15800625.4
(22) Date of filing: 27.05.2015
(51) Int. Cl.: G06F 9/455, G06F 15/16

(54) **GROUPING VIRTUAL MACHINES IN A CLOUD APPLICATION**
GRUPPIERUNG VIRTUELLER MASCHINEN IN EINER CLOUD-ANWENDUNG
REGROUPEMENT DE MACHINES VIRTUELLES DANS UNE APPLICATION EN NUAGE

(30) Priority: 27.05.2014 US 201414287366
(43) Date of publication of application: 05.04.2017
(73) Proprietor: VMware LLC, Palo Alto, CA 94304 (US)
(72) Inventor: MOHAMMED, Intesar, Santa Clara, CA 95050 (US); NAGARAJA, Vishwas, Palo Alto, CA 94304 (US)
(74) Representative: Dilg, Haeusler, Schindelmann Patentanwaltsgesellschaft mbH
(86) International application number: PCT/US2015/032625
(87) International publication number: WO 2015/183919

(56) References cited:
- KR-A- 20120 013 074
- US-A- 4 975 836
- US-A1- 2008 163 171
- US-A1- 2013 227 560
- US-A1- 2013 325 885
- US-A1- 2014 137 111
- US-B1- 8 732 699

## Description

### Background

A number of software platforms include an application management server that enables the modeling of virtual machine-based cloud applications. Using such an application management server, an application designer completes an application model, where the application may consist of many virtual machines, each of which runs a different component of the modeled application. Thus, an n-tiered virtualized cloud application may comprise n virtual machine servers ("virtual servers" for short). A first virtual server may run a first application component (such as an authentication module), a second virtual server may run a second application component (such as database services), and so on. An example of such an application management server is Application Director^{™}, which is available commercially from VMware, Inc. of Palo Alto, California.

Application management servers may also serve as deployment engines. That is, once an application has been modeled, the modeling platform provides a means of deploying the application (and all virtual machines modeled therein) to a cloud computing environment. However, once a virtual machine is physically deployed to a cloud, the deployed virtual machine is typically unavailable to the application management server. To facilitiate integration between the modeling/deployment platform and applications deployed in the cloud, it has become useful to logically group and identify one or more of the virtual machines deployed to a cloud infrastructure using a single application identifier. As an example, while a cloud-based application is being deployed, it is convenient to retrieve information for all deployed virtual machines simultaneously using a single identifier, rather than access a multitude (perhaps thousands) of virtual machines individually.

Further, it is also convenient to refer to each individual virtual machine deployed in a cloud by the application management server. This enables an application designer to change an application model of a previously deployed application, and to deploy the changes to the virtual machines already executing in the cloud. In addition, when a virtual machine of the cloud application is scaled up or down by a cloud system administraor (who typically acts independently of an application designer), the virtual machine being scaled is usually deleted and recreated with newly scaled system parameters. Requiring the application management server to track the newly scaled virtual machine would be burdensome. On the other hand, providing the application management server with a means of referring to deployed virtual machines with a more abstract (and independent) identifier alleviates this burden.

US4975836 describes a virtual machine system which has a processor operating as a base machine and a plurality of groups of registers. A status register file is provided to effect selective access to a respective one of a plurality of status registers in the system in accordance with a virtual machine number. US2013/227560 describes a mechanism for system resource sharing in a multi-tenant platform as a service environment in a cloud computing system. KR-10-2012-0013074 describes a method for switching a multi virtual machine including supplying a list for applications installed in several virtual machines to a user. US8732699 describes a system including plural physical machines containing virtual machines with migration being performed between or among the physical machines in a first group of the physical machines. US 2013/0325885 describes a method of provisioning composite applications using a plurality of virtual machines including using component identifiers, application identifiers and virtual machine identifiers.

### Summary

According to the present invention there is provided a method as set forth in claim 1. Also there is provided a medium as in claim 10 and a system as in claim 11. Additional features of the invention will be appreciated from the dependent claims and the discussion herein.

One or more embodiments provide two identifiers for a virtual machine that is deployed to a cloud computing envrionment using an application management server. A first identifier identifies the application that the virtual machine is a part of, and which is useful when all virtual machines of the application need to be accessed by the application management server. Further, a second identifier individually identifies the virtual machine, and is useful when only a particular virtual machine, or limited set of deployed virtual machines, needs to be accessed by the application management server.

A method of deploying an application that is executed in a plurality of virtual machines in a cloud computing environment, according to embodiments, includes the steps of generating an application identifier and generating a first virtual machine identifier for a first virtual machine. The method further comprises the steps of instantiating the first virtual machine in the cloud computing environment and generating a second virtual machine identifier for the first virtual machine. The method further comprises the step of creating an association among the application identifier, the first virtual machine identifier, and the second virtual machine identifier.

Further embodiments provide a non-transitory computer-readable medium that includes instructions that, when executed, enable a plurality of host computers to implement one or more aspects of the above method.

Further embodiments also provide a virtualized computing system that is configured to implement one or more aspects of the above method.

### Brief Description of the Drawings

Fig. 1 is a block diagram depicting components of a virtualized cloud computing environment in which one or more embodiments may be implemented.
Fig. 2 is a conceptual diagram that illustrates the generation and association of identifiers for a virtual machine that is configured within a cloud-based application, according to one or more embodiments.
Fig. 3 is a flow diagram that illustrates a method of deploying a multi-VM cloud-based application, according to one or more embodiments.
Fig. 4 is a conceptual diagram that illustrates the deployment of a multi-VM cloud-based application, according to one or more embodiments.
Fig. 5 is a flow diagram of a method of scaling up a virtual machine in a cloud-based computing environment, according to one or more embodiments.
Fig. 6 is a conceptual diagram that illustrates the scaling up of a virtual machine in a cloud-based computing environment, according to embodiments.
Fig. 7 is a flow diagram that illustrates a method of scaling out a virtualized cloud-based application, according to one or more embodiments.
Fig. 8 is a conceptual diagram that depicts the scaling out of a single-VM cloud-based application to a dual-VM cloud-based application, according to one or more embodiments.

### Detailed Description

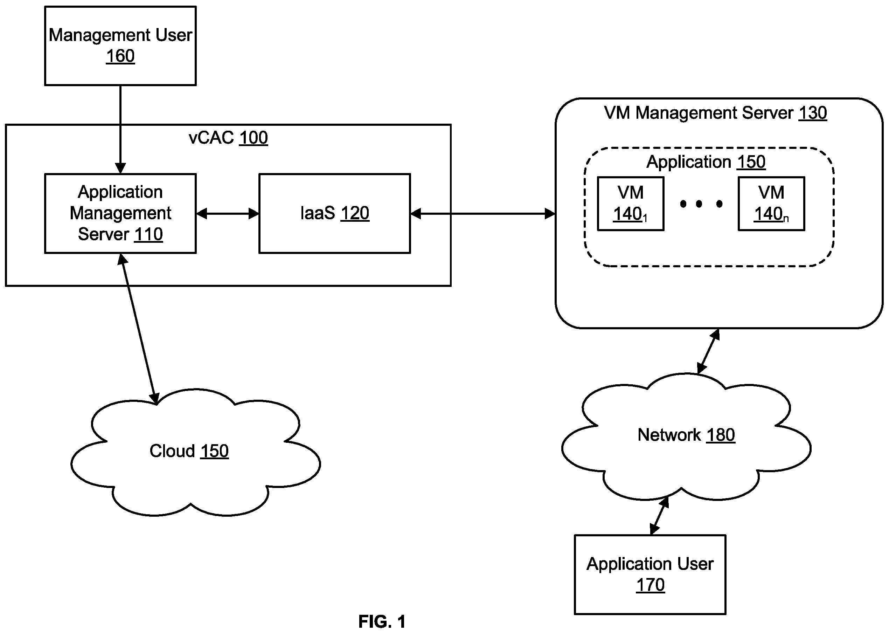

Fig. 1 is a block diagram of components of a virtualized cloud computing environment in which one or more embodiments may be implemented. Virtualized cloud computing environments typically comprise one or more platforms that support the creation, deployment, and management of virtual machine-based cloud applications. One such platform is the vCloud^{®} Automation Center (or vCAC), which is commercially available from VMware, Inc. of Palo Alto, California. Fig. 1 depicts vCAC 100 as an application deployment platform in the cloud computing environment shown. While vCAC 100 is illustrated in the environment depicted in Fig. 1, it should be noted that any computing platform that supports the creation and deployment of virtualized cloud application is within the scope of the present invention.

As shown in Fig. 1, vCAC 100 includes two components. First, vCAC includes application management server 110. In one or more embodiments, application management server 110 comprises one or more computer-based processes that implement an application provisioning platform that supports the creation and deployment of applications in cloud computing environments. An end user of application management server 110 (referred to in Fig. 1 as management user 160) defines the structure and topology of a cloud-based application. Among the components of a cloud-based application that management user 160 creates and interconnects are virtual machines that run the various software components of the cloud-based application. For example, management user 160 may wish to define a cloud-based data storage application. In such a case, management user 160 accesses application management server 110 to model and create the data storage application. As an example, the data storage application in question may be defined as a "three-tiered" application, which includes a component that is responsible for storing data, a component that is responsible for providing data security, and a component for publishing data for viewing in a web-based application. Such an application may be modeled in application management server 110 as comprising a separate virtual machine (or virtual server) for each of the aforementioned components. Once management user 160 has completed modeling a cloud-based application, application management server 110 generates an application blueprint (not shown) for the modeled application. In addition, an application deployment plan (not shown) is saved in application management server 110, where the application deployment plan is executed once the application is selected for deployment to a cloud infrastructure.

Fig. 1 also depicts vCAC 100 as including a component that enables the provisioning of virtualized infrastructure components in a cloud-based computing environment. To accomplish this, IaaS 120 is a software component that enables the selection of virtual hardware elements to be deployed along with a cloud-based application. That is, IaaS 120 contains templates for various types of virtual devices (such as virtual servers), which may be instantiated in a cloud. For example, IaaS 120 may have configured and stored templates for virtual machines with certain processing, memory, and storage capacities. Thus, in a particular embodiment, IaaS 120 may have stored therein a template for a first type of virtual server with 32 Gigabytes (GB) of random access memory (RAM), and a template for a second type of virtual server with 64 GB of RAM.

As shown, IaaS 120 communicates directly with application management server 110. When a virtualized application is to be deployed to a cloud, the application typically requires virtual hardware devices (e.g., virtual machines) on which application and system software is to be installed and in which the application executes. In one or more embodiments, application management server 110 (under the direction of management user 160) selects virtual machine types from the templates provided by IaaS 120, where each virtual machine defined in the modeling phase of the application corresponds to a type of virtual machine template that is made available by IaaS 120. Thus, using the example of the data storage application mentioned above, management user 160 may determine that the data storage application component is to run on a 64 GB RAM virtual machine, but that the data security and data publishing components may each run on a 32 GB RAM virtual machine. In such a case, when the data storage application is deployed, application management server 110 communicates with IaaS 120 in order to select the appropriate virtual machine type for each of the virtual machines modeled as part of the virtualized application.

In embodiments, IaaS 120 communicates directly with a cloud computing platform (or a cloud "provider"). Cloud computing platforms typically include the computing resources required to support the execution of cloud-based applications. Thus, the infrastructure in a cloud computing platform typically includes virtual and physical computing hardware, along with application and system software. Some cloud infrastructure platforms (i.e. platforms that support multiple cloud-based applications) include mechanisms that allow for the balancing and reallocation of virtual and physical hardware resources based on application demand.

As shown in Fig. 1, IaaS 120 communicates with VM management server 130, which is an example of system software that implements a cloud-based computing platform. In one embodiment, VM management server 130 may comprise the vCenter Server^{™} and vSphere^{®} program products, which are commercially available from VMware, Inc. In the embodiment shown in Fig. 1, VM management server 130 comprises one or more computer-based processes that support the instantiation and execution of multiple virtual machines (VMs). Thus, in the figure, VMs 140₁-140ₙ are depicted as instantiated in VM management server 130. Further, each of VMs 140₁-140ₙ is shown as being a part of application 150. Application 150 is an example of a "tiered" virtualized application as previously mentioned. Thus, each VM 140 in application 150 corresponds to a particular component of a corresponding application that is defined in application management server 110. Again referring to the cloud-based data storage application, management user 160 defines and models the application using application management server 110, deploys the application using application management server 110 in conjunction with IaaS 120, and the application is instantiated in a cloud environment (i.e. VM management server 130) by IaaS 120 communicating a deployment request to VM management server 130. It should be noted that the actual instantiation of VMs 140 in the cloud is performed by VM management server 130 at the request of IaaS 120. Further, it will be described in more detail below how VMs 140 are associated as part of a single application 150.

Once a cloud-based application is deployed to VM management server 130, the application may be accessed and used by an application user 170. As shown in Fig. 1, application user 170 accesses application 150 through network 180, which is, in turn, connected to VM management server 130. In embodiments, VM management server 130 (the cloud "provider") makes available a particular application deployed therein by accepting web requests for the application over a distinct Uniform Resource Locator (URL).

It should also be noted that, in some embodiments, application management server 110 may be configured to communicate directly with certain cloud infrastructures (e.g., public clouds), such as Amazon Web Services or Microsoft. This communication is depicted by the connection between application 110 and cloud 150. Thus, in some embodiments, application management server 110 may be configured to deploy applications directly to public cloud providers, utilizing the infrastructure services provided by those cloud providers.

Further, although the embodiment of Fig. 1 depicts vCAC 100 and VM management server 130 as running on separate host computers (i.e., separate physical servers), it should be noted that some or all of the functionality of VM management server 130 may be performed by modules residing on the same host computer as vCAC 100. In such embodiments, these modules are configured to perform certain virtual machine management functions that are typically performed by VM management server 130 (e.g., balancing workloads between virtual machines within a cloud computing environment or between several cloud computing environments). Still other embodiments of vCAC 100 include modules that are configured to instantiate virtual machines in a cloud computing environment. Indeed, the combined functionality of vCAC 100 and VM management server 130 (as depicted in Fig. 1) may be implemented either in a single host computer or distributed among several host computers.

When a cloud-based application is modeled and deployed to a cloud using application management server 110 and IaaS 120, it is desirable for a management user 160 connected to application management server 110 to be able to access the deployed virtual machines by referring to the deployed virtual machines according to how the virtual machines are identified in application management server 110. For example, during a deployment operation of a cloud-based application comprising 100 virtual machines, management user 160 may wish to check the status of one or all of the 100 virtual machines as the virtual machines are referred to in application management server 110. Thus, in some embodiments, management user 160 may transmit a query to IaaS 120 and to VM management server 130, requesting a listing of all virtual machines being deployed for a particular application. The response to such an inquiry would be helpful in determining the progress of the deployment of the cloud-based application, and whether any deployment failures have occurred within VM management server 130. In other cases, management user 160 may transmit a query to determine the status of one particular virtual machine that is a component of a cloud-based application currently under deployment. The response to such an inquiry would be helpful in determining whether or not the particular virtual machine being queried may be instantiated or may have certain application or system software installed on it.

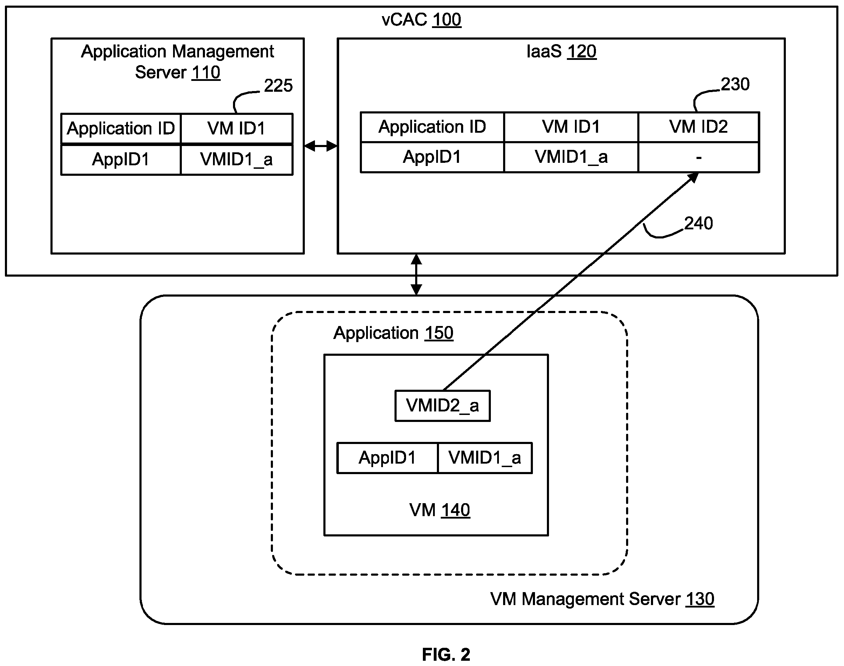

Fig. 2 is a block diagram that illustrates the generation and association of identifiers for a virtual machine that is configured within a cloud-based application, according to one or more embodiments. As shown in Fig. 2, application management server 110 has modeled therein one single VM cloud-based application. The modeling of the application is performed by management user 160 accessing application management server 110 (as was shown in Fig. 1). Among the elements that application management server 110 generates and stores when a cloud-based application is modeled and deployed are specific identifiers that pertain to the cloud-based application as a whole, and to individual virtual machines that are included in the cloud-based application. In embodiments, this metadata for the cloud-based application is stored within a data structure, such as table 225 illustrated in Fig. 2. Alternatively, the metadata is stored in a file system that is accessible to application management server 110.

When management user 160 models, saves, and deploys a cloud-based application using application management server 110, application management server 110 generates unique identifiers. For the embodiment illustrated in Fig. 2, application management server 110 generates a unique application ID (referred to in the example depicted in Fig. 2 as AppID1), which is an identifier for the application as a whole. For example, if management user 160 models a database application that is to run and access an Oracle database, then application management server 110 generates a single application ID (e.g., AppID1) that corresponds to that database application. Thus, using application management server 110, a management user would be able to refer to or query any element of the database application using the generated application ID.

In addition, when management user 160 models, saves, and deploys a cloud-based application using application management server 110, application management server 110 generates a unique identifier for each virtual machine that is a component of the cloud-based application. Referring to Fig. 2, this unique identifier is identified as VM ID1. In the example illustrated in Fig. 2, a single VM ID1 (i.e., VMID1_a) is generated for the cloud-based application identified by AppID1. Thus, the cloud-based application identified by AppID1 is a single-VM application, wherein the single VM defined for the application is identified in application management server 110 by VMID1_a. For example, management user 160 may model a single-VM cloud-based database application, where the virtual machine is configured to run the Oracle database software as well as user defined application software. The database application as a whole is referred to by its unique application ID (i.e., AppID1), while only the virtual machine that is a part of the database application is referred to by its unique VM ID1 (i.e., VMID1_a). Thus, if management user 160 wishes to retrieve (using application management server 110) the status of all components of the application depicted in Fig. 2 (e.g., the virtual machine and any other virtual hardware elements, such as virtual switches and disks), management user 160 formulates and transmits a query from application management server 110 to the cloud, referring to AppID1. If management 160 user wishes to retrieve (using application management server 110) the deployment status of only the single virtual machine in the application depicted in Fig. 2, management user 160 formulates and transmits a query from application management server 110 to the cloud, referring to VMID1_a.

As shown in Fig. 2, application management server 110 communicates directly with IaaS 120. IaaS 120, in turn, communicates directly with VM management server 130. As previously mentioned, IaaS 120 provides a selection of predefined virtual machine types (or templates) that management user 160 may associate with the virtual machines modeled in application management server 110. When management user 160 deploys an application, application management server 110 transmits a deployment request to IaaS 120. IaaS 120, in embodiments, transmits one or more requests to VM management server 130 in order to instantiate the requested virtual machines. Thus, in the example illustrated in Fig. 2, application management server 110 transmits a request to deploy the cloud-based application having an application ID, AppID1, and associated with a virtual machine having a VM ID1 identifier, VMID1_a, to IaaS 120. In one or more embodiments, IaaS 120 receives the deployment request (which includes the application ID and the VM ID1 identifier), and transmits a request to VM management server 130 to instantiate the required virtual machine. As shown in Fig. 2, IaaS 120 stores the application ID, AppID1, and the VM ID1 identifier, VMID1_a, as associated items in a data structure (e.g., table 230). In addition, table 230 in IaaS 120 includes another column so that AppID1 and VMID1_a can be associated with another yet to be identified VM.

As shown in the lower part of Fig. 2, VM management server 130 receives virtual machine instantiation requests from IaaS 120 and, in response thereto, instantiates virtual machines within the cloud. As shown in the figure, VM 140 is instantiated in response to a request received from IaaS 120, which corresponds to the request IaaS 120 receives from application management server 110. In the embodiment illustrated, VM 140 also contains metadata, which is either stored in virtual memory or on a virtual storage device that is configured as a part of VM 140. The metadata includes AppID1 and VMID1_a, which, as was mentioned previously, are the identifiers generated by application management server 110 when a cloud-based application is modeled therein. Additionally, VM 140 also includes an additional identifier, VMID2_a. VMID2_a is a unique virtual machine identifier (referred to generally as VM ID2) that is generated by VM management server 130 when a virtual machine is instantiated therein. VM ID2 may be stored in the instantiated virtual machine. Alternatively, VM ID2 may be stored external to the virtual machine while being logically associated with the virtual machine. Referring to Fig. 2, since VMID2_a is generated independently from AppID1 and VMID1_a, there remains the task to associate the identifiers generated by application management server 110 (i.e., AppID1 and VMID1_a) with the identifier generated by VM management server 130 (i.e., VMID2_a).

In the embodiment illustrated in Fig. 2, once VM management server 130 instantiates VM 140 and generates VMID2_a, VM management server 130 transmits VMID2_a to IaaS 120. When IaaS 120 receives VMID2_a from VM management server 130, IaaS 120 stores VMID2_a in table 230 in a way so as to associate AppID1 and VMID1_a with VMID2_a. This storing of VMID2_a is illustrated conceptually in Fig. 2 by arrow 240 extending from VMID2_a within VM 140 to the null data field in table 230 within IaaS 120. Once VMID2_a is stored in table 230 of IaaS 120, then AppID1 and VMID1_a are associated with VMID2_a. Hence, an association is created between the application configured in application management server 110 (i.e., the application with application ID AppID1) and the virtual machine instantiated within VM management server 130 (i.e., VM 140). This association is illustrated conceptually by showing VM 140 as grouped within application 150. It should be noted that application 150 serves as a way of identifying a grouping of virtual machines instantiated in VM management server 130 within a single application having a single unique application identifier (e.g., AppID1). Thus, in Fig. 2, VM 140 is grouped into application 150, which logically corresponds to the application modeled in application management server 110 identified by AppID1.

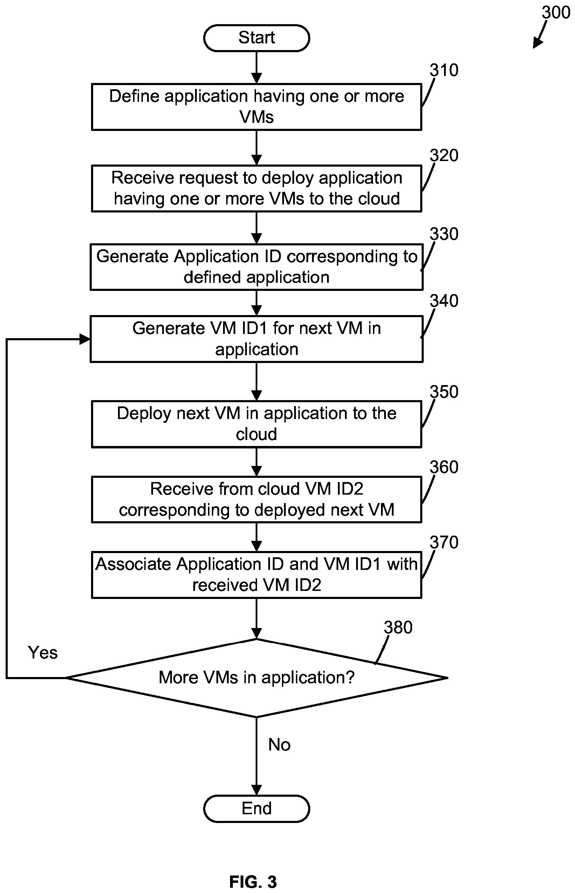

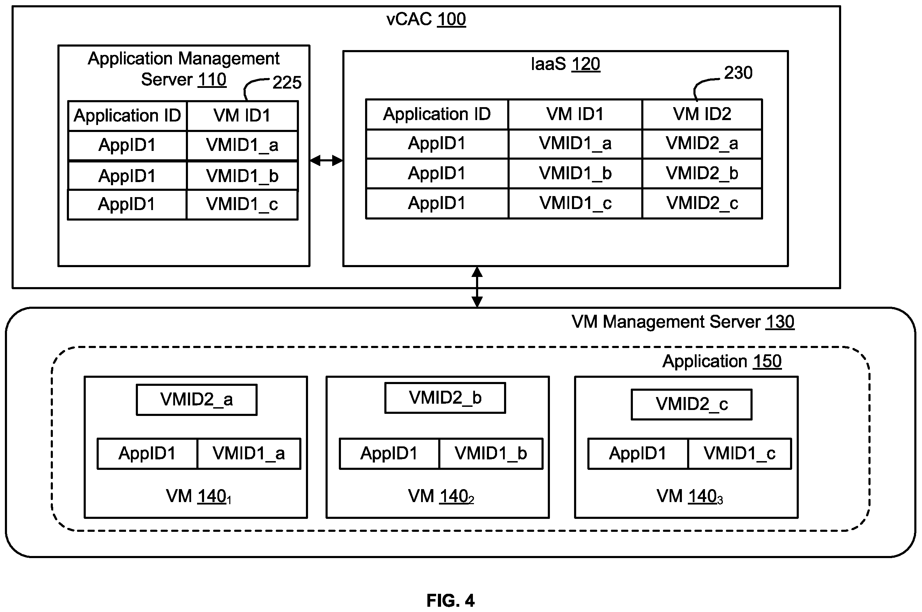

Fig. 3 is a flow diagram that illustrates a method 300 of deploying a multi-VM cloud-based application, according to one or more embodiments. For purposes of illustration, Fig. 3 is described in conjunction with the block diagram of Fig. 4. As shown, method 300 begins at step 310, where an application with one or more VMs is modeled. As previously mentioned, this is typically accomplished by a management user using application management server 110. As an example, in Fig. 4, application management server 110 has modeled therein a cloud-based application having three separate virtual machines. Referring back to the example of the cloud-based data storage application, the first virtual machine may be a storage server, the second virtual machine may be a security server, and the third virtual machine may be a publishing server.

Referring to Fig. 3, once the cloud-based application is modeled at step 310, method 300 proceeds to step 320. At step 320, application management server 110 receives a request to deploy the modeled application to a cloud infrastructure. In response to receiving the deployment request at step 320, application management server 110 generates, at step 330, a unique application ID that corresponds to the modeled application. With reference to Fig. 4, AppID1 (which is stored in table 225 within application management server 110) corresponds to the modeled application.

Once the unique application ID has been generated, method 300 proceeds to step 340. At step 340, a unique VM ID1 is generated for a next virtual machine that is modeled within the cloud-based application. In the example depicted in Fig. 4, a three-VM cloud based application is modeled in application management server 110. Hence, at step 340, VMID1_a is generated and stored for the first of the three virtual machines.

In the present embodiment, method 300 then proceeds to step 350, where the virtual machine whose VM ID1 has been generated at step 340 is deployed to (or instantiated in) the cloud. In embodiments, deployment of a VM to the cloud comprises transmitting a deployment request for the VM from application management server 110 to IaaS 120. The deployment request includes the generated application ID and VM ID1 (e.g., AppID1 and VMID1_a, from Fig. 4). IaaS 120 then transmits a further request to the cloud infrastructure (e.g., to VM management server 130) to instantiate a VM corresponding to the deployment request. As shown in Fig. 4, IaaS 120 receives a deployment request for the first VM modeled in application management server 110 (i.e., the VM identified by VMID1_a). IaaS 120 stores AppID1 and VMID1_a in table 230, and transmits an instantiation request to VM management server 130 corresponding to the VM identified in application management server 110 by VMID1_a. VM management server 130 then instantiates a first virtual machine (i.e., VM 140₁). As shown in Fig. 4, VM 140₁ stores metadata that includes AppID1 and VMID1_a. In addition, as a result of the instantiation of VM 140₁, VM management server 130 generates VMID2_a, which is stored in (or is logically associated with) VM 140₁.

Once the next VM modeled in the application is deployed to the cloud (i.e., instantiated in the cloud), method 300 proceeds to step 360. At step 360, the generated VM ID2, which, as previously mentioned, is generated by the cloud (e.g., VM management server 130) when the cloud instantiates a VM, is received by IaaS 120 from the cloud. Thus, with reference to Fig. 4, at step 360, VM management server 130 transmits VMID2_a (which VM management server 130 generates at step 350) to IaaS 120.

At step 370, IaaS 120 associates VMID2_a received at step 360 with application ID AppID1 and VM ID1 VMID1_a, which are generated, respectively, in steps 330 and 340. Thus, as shown in Fig. 4, IaaS 120 receives VMID2_a from VM management server 130 and stores it in the entry of table 230 that contains AppID1 and VMID1_a. Thus, in this way, an association is established between AppID1 and VMID1_a (which uniquely identify, from the perspective of application management server 110, the first modeled virtual machine) with VM 140₁ (which is the corresponding virtual machine instantiated within VM management server 130).

At step 380, method 300 determines whether there are more VMs modeled as part of the cloud-based application in application management server 110. If there are more VMs, then method 300 proceeds back to step 340, where a next VM ID1 is generated for the next VM. Thus, referring to Fig. 4, VMID1_b is generated for the second VM. Method 300 then proceeds through steps 350-370 to deploy the second VM to the cloud and to associate the deployed second VM with the second VM as modeled in application management server 110. As shown in Fig. 4, VM management server 130 instantiates VM 140₂ and generates VMID2_b. AppID1 and VMID1_b are then associated with VMID2_b in the second entry of table 230. It should be noted that method 300 proceeds through steps 340-370 in like manner for the third virtual machine modeled in application management server 110 (i.e., the virtual machine identified by VMID1_c).

If, at step 380, method 300 determines that there are no more VMs modeled as part of the cloud-based application in application management server 110, then all application VMs are deployed and method 300 terminates.

As was previously mentioned, it is useful to associate the identifier for a virtual machine as generated by application management server 110 (i.e., the Application ID and/or VM ID1) with the identifier generated by VM management server 130 for the same virtual machine when the virtual machine is deployed to the cloud (i.e., VM ID2). One benefit is the ability to track the progress of deployment of virtual machines directly from application management server 110. Another benefit is the ability to access an already-deployed virtual machine at a time well after its deployment in order to update or install new software on the virtual machine. However, when a virtual machine is scaled up or scaled down by a system administrator, the association between the Application ID and VM ID1 (as generated by application management server 110) with VM ID2 (as generated by VM management server 130) may be broken.

After a virtual machine is deployed to a cloud infrastructure (such as VM management server 130), a system administrator may perform "scaling" on the virtual machine. Scaling a virtual machine refers to dynamically changing system parameters (such as the amount of available RAM, the number of available CPUs, and the like) of the virtual machine. A virtual machine may be scaled up or down using system administration tools that are operated independently of application management server 110. For example, a system administrator may perform administration tasks on cloud-based virtual machines using the VSphere suite of administration tools, which is commercially available from VMware, Inc. Typically, scaling a cloud-based virtual machine entails allocating a new virtual machine in the cloud with the required scaled up (or scaled down) parameters, copying the runtime state and data of the existing virtual machine to the newly scaled virtual machine, instantiating and starting the newly scaled virtual machine, and destroying (or deallocating) the previously existing virtual machine. In this way, the newly scaled virtual machine replaces the previously existing virtual machine.

However, if the previously existing virtual machine had been deployed to the cloud through application management server 110, then the association between the identifiers generated by application management server 110 (Application ID and VM ID1) and the identifier generated by VM management server 130 (VM ID2) is broken. The reason for this is due to the fact that when VM management server 130 creates the newly scaled virtual machine, a new VM ID2 is generated in the process. It should be noted that the VM ID2 of the previously existing virtual machine is not copied to or associated with the newly scaled virtual machine. In addition, once the newly scaled virtual machine is started, the previously existing virtual machine is destroyed, along with the metadata for that virtual machine. Thus, the VM ID2 of the previously existing virtual machine no longer refers to an existing virtual machine.

Nonetheless, the application ID and VM ID1 of the previously existing virtual machine is stored persistently, in embodiments, in table 230 of IaaS 120, as well as in table 225 of application management server 110. Thus, application management server 110 maintains a unique handle to the applications and corresponding virtual machines that have been previously modeled and deployed. Therefore, it is possible to establish an association between the Application ID and VM ID1 of the virtual machines modeled in application management server 110 after such virtual machines are scaled up or down independently of application management server 110 (for example, when those virtual machines are newly scaled using VSphere administration tools).

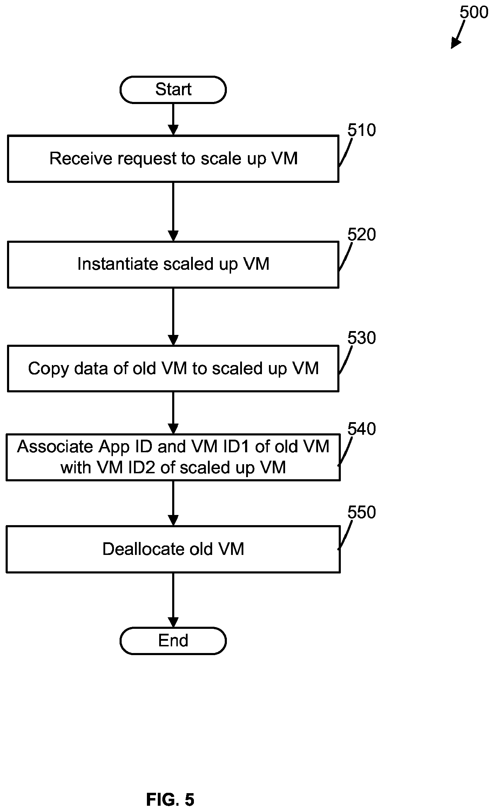

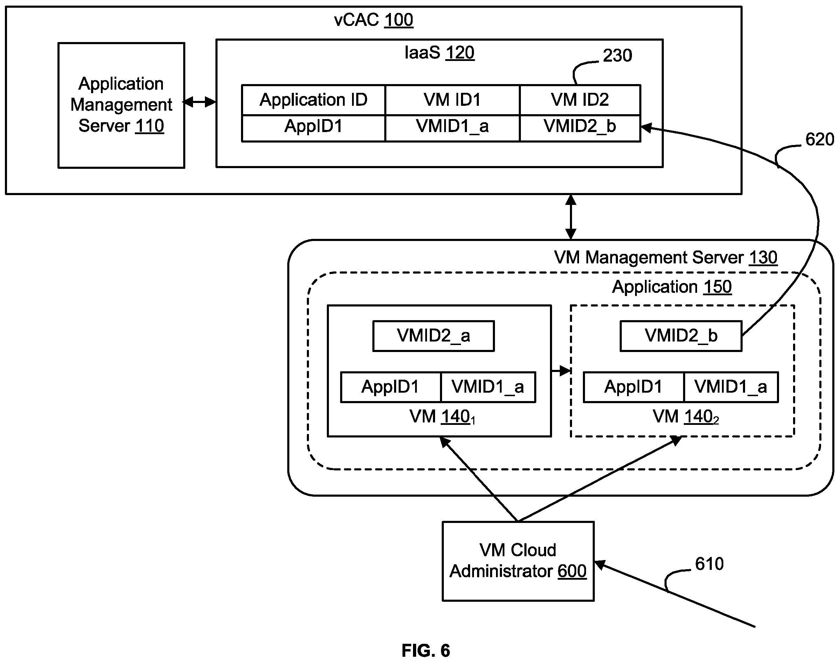

Fig. 5 is a flow diagram of a method 500 of scaling up a virtual machine in a cloud-based computing environment, according to one or more embodiments. Fig. 5 will be described in conjunction with Fig. 6, which is a block diagram that illustrates conceptually the scaling up of a virtual machine in a cloud-based computing environment. As shown in Fig. 6, VM 140₁ is a virtual machine instantiated in VM management server 130 as a result of a previous deployment of an application (identified in application management server 110 and IaaS 120 by application ID AppID1) with one virtual machine (identified in application management server 110 and IaaS 120 by VM ID1 VMID1_a). At the time VM management server 130 instantiates VM 140₁, VM management server 130 generates VMID2_a and associates this identifier with VM 140₁. Method 500 begins at step 510, where a request to scale up a virtual machine is received. As shown in Fig. 6, scaling request 610 is received by VM cloud administrator 600. VM cloud administrator 600 may, in embodiments, comprise the vSphere^{®} suite of administration tools available from VMware, Inc. In embodiments, request 610 is transmitted to VM cloud administrator 600 by a system administrator through, for example, a system console.

Method 500 then proceeds to step 520, where, in response to the scaling request, a newly scaled up virtual machine is instantiated in the cloud. This is illustrated in Fig. 6 by the creation (by VM cloud administrator 600 communicating with VM management server 130) of a new virtual machine VM 140₂. In embodiments, VM 140₂ is created with scaled up system parameters in relation to previously instantiated and deployed VM 140₁. The dotted outline of VM 140₂ denotes that VM 140₂ is newly created. It should be noted that when VM 140₂ is created, VM management server 130 generates VMID2_b, which is different from VMID2_a of VM 140₁.

Next, at step 530, the data of VM 140₁ is copied to VM 140₂. As shown in Fig. 6, this includes the metadata items AppID1 and VMID1_a. However, VMID2_a is not copied to or associated with VM 140₂.

Once the data (and metadata) of VM 140₁ are copied to VM 140₂, method 500 proceeds to step 540. At step 540, the application ID and VM ID1 of the previously existing virtual machine are associated with VM ID2 of the newly scaled up VM. With reference to the embodiment illustrated in Fig. 6, this association is performed via VM management server 130 communicating VMID2_b to IaaS 120. In response, IaaS 120 (which, prior to the scaling up of VM 140₁, stored AppID1, VMID1_a, and VMID2_a as associated data elements in table 230), stores VMID2_bin the entry of table 230 corresponding to AppID1 and VMID1_a. This is shown conceptually in Fig. 6 by arrow 620. In addition, VM 140₂ is depicted in Fig. 6 as being grouped within VM management server 130 as part of application 150, which, as previously mentioned, corresponds to the application identified in application management server 110 by AppID1.

Once the application ID and VM ID1 of the previously existing virtual machine (e.g., AppID1 and VMlD1_a in Fig. 6) is associated with the VM ID2 of the newly scaled virtual machine (e.g., VMID2_b in Fig. 6), method 500 proceeds to step 550, where the previously existing virtual machine (i.e., VM 140₁) is deallocated. After step 550, method 500 terminates.

In addition to scaling up (or down) an individual virtual machine within a cloud-based application, cloud-based applications may be "scaled in" or "scaled out." Scaling in a cloud-based application refers to removing some virtual machines from the application while continuing to execute the application within the cloud. Scaling out a cloud-based application refers to adding virtual machines to the application while the application executes in the cloud. While scaling up and scaling down a virtual machine is typically performed by accessing a system administration tool that is independent of application management server 110 (such as VM cloud administrator 600), scaling a cloud-based application either in or out is performed by a management user (such as management user 160 of Fig. 1) that accesses application management server 110.

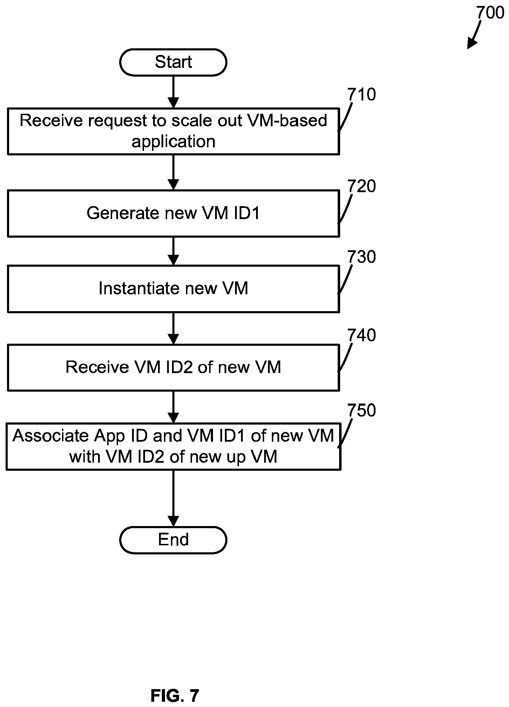

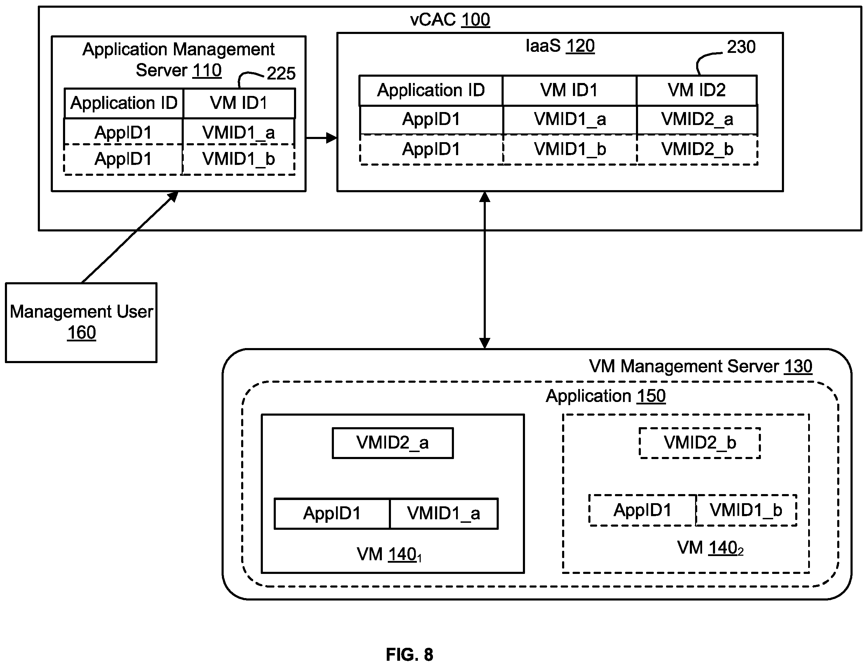

Fig. 7 is a flow diagram that illustrates a method 700 for scaling out a virtualized cloud-based application, according to one or more embodiments. Fig. 7 is described herein in conjunction with Fig. 8, which is a block diagram that depicts the scaling out of a single-VM cloud-based application to a dual-VM cloud-based application. Referring to Fig. 8, management user 160 accesses application management server 110, which has modeled therein a single-VM application previously deployed to VM management server 130. The deployed application is identified by application ID AppID1 and the first VM is identified by VMID1_a. As shown in Fig. 8, table 230 of IaaS 120 associates AppID1 and VMID1_a with VMID2_a, which is the VM ID2 of previously deployed virtual machine VM 140₁.

Method 700 begins at step 710, where application management server 110 receives a request to scale out the application identified in Fig. 8 by AppID1. In the embodiment illustrated, the scale out request is for the addition of one virtual machine to the cloud-based application. However, any number of virtual machines may be added in a single request. Further, as previously mentioned, such a request is received, in embodiments, from management user 160.

Next, at step 720, application management server 110 generates a new VM ID1 for the newly requested virtual machine. As shown in Fig. 8, application management server 110 generates VMID1_b for the new virtual machine, which corresponds to AppID1. At step 730, the new virtual machine is deployed to the cloud. As was previously mentioned with respect to Fig. 3, in one or more embodiments, application management server 110 transmits a deployment request for a virtual machine to IaaS 120, which, in turn, transmits a request to VM management server 130 (i.e., the cloud infrastructure). Referring to Fig. 8, after application management server 110 transmits the deployment request for the second virtual machine (i.e., the virtual machine identified by VMID1_b) to IaaS 120, IaaS 120 stores AppID1 and VMID1_b as associated data elements in table 230. In addition, IaaS 120 transmits a request to VM management server 130 to instantiate the new virtual machine the cloud.

In response to the request from IaaS 120, VM management server 130 instantiates VM 140₂, generating VMID2_b in the process. Note that AppID1 and VMID1_b are included in the metadata of newly instantiated VM 140₂.

Once the second virtual machine (i.e., VM 140₂) is instantiated in the cloud, method 700 proceeds to step 740. At step 740, IaaS 120 receives from VM management server 130 VMID2_b of newly instantiated VM 140₂. Finally, at step 750, IaaS 120 associates AppID1 and VMID1_b (which are both generated by application management server 110) with VMID2_b (which is generated by VM management server 130). Referring to Fig. 8, IaaS 120 makes this association by storing VMID2_b in the entry of table 230 that associates AppID1 with VMID1_b. Thus, once the association is made at step 750, management user 160 may access VM 140₂ from application management server 110. This is useful should management user 160 wish to install software on VM 140₂ from application management server 110 at a later point in time.

The various embodiments described herein may employ various computer-implemented operations involving data stored in computer systems. For example, these operations may require physical manipulation of physical quantities-usually, though not necessarily, these quantities may take the form of electrical or magnetic signals, where they or representations of them are capable of being stored, transferred, combined, compared, or otherwise manipulated. Further, such manipulations are often referred to in terms, such as producing, yielding, identifying, determining, or comparing. Any operations described herein that form part of one or more embodiments of the disclosure may be useful machine operations. In addition, one or more embodiments of the disclosure also relate to a device or an apparatus for performing these operations. The apparatus may be specially constructed for specific required purposes, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

The various embodiments described herein may be practiced with other computer system configurations including hand-held devices, microprocessor systems, microprocessor-based or programmable consumer electronics, minicomputers, mainframe computers, and the like.

One or more embodiments of the present disclosure may be implemented as one or more computer programs or as one or more computer program modules embodied in one or more computer readable media. The term computer readable medium refers to any data storage device that can store data which can thereafter be input to a computer system-computer readable media may be based on any existing or subsequently developed technology for embodying computer programs in a manner that enables them to be read by a computer. Examples of a computer readable medium include a hard drive, network attached storage (NAS), read-only memory, random-access memory (e.g., a flash memory device), a CD (Compact Discs) --CD-ROM, a CD-R, or a CD-RW, a DVD (Digital Versatile Disc), a magnetic tape, and other optical and non-optical data storage devices. The computer readable medium can also be distributed over a network coupled computer system so that the computer readable code is stored and executed in a distributed fashion.

Although one or more embodiments of the present disclosure have been described in some detail for clarity of understanding, it will be apparent that certain changes and modifications may be made within the scope of the claims. Accordingly, the described embodiments are to be considered as illustrative and not restrictive, and the scope of the claims is not to be limited to details given herein, but may be modified within the scope of the claims. In the claims, elements and/or steps do not imply any particular order of operation, unless explicitly stated in the claims.

Many variations, modifications, additions, and improvements are possible. Plural instances may be provided for components, operations or structures described herein as a single instance. Boundaries between various components, operations and data stores are somewhat arbitrary, and particular operations are illustrated in the context of specific illustrative configurations. Other allocations of functionality are envisioned and may fall within the scope of the disclosure(s). In general, structures and functionality presented as separate components in exemplary configurations may be implemented as a combined structure or component. Similarly, structures and functionality presented as a single component may be implemented as separate components. These and other variations, modifications, additions, and improvements may fall within the scope of the appended claim(s).

## Claims

1. A method of deploying, by a virtualised computing system comprising a virtual machine management server (130) and an application management server (110), an application (150) to a cloud computing environment (100) comprising a plurality of virtual machines (140₁-140ₙ) managed by the virtual machine management server (130), the application (150) being executed using a plurality of the virtual machines (140₁-140ₙ) including a first virtual machine (140₁), the method comprising:
by the application management server (110) in which the application (150) is modeled prior to deployment:
generating a unique application identifier (AppID1) which is an identifier for the application (150) as a whole;
generating a first unique virtual machine identifier (VMID1) for the first virtual machine (140i) wherein the first unique virtual machine identifier (VMID1) identifies the first virtual machine (140₁) as being a part of the application (150);
sending instructions to the virtual machine management server (130) to deploy the application (150);
by the virtual machine management server (130):
receiving the instructions to deploy the application (150);
instantiating the first virtual machine (140₁) within the virtual machine management server (130);
generating a second unique virtual machine identifier (VMID2) independently from the unique application identifier (AppID1) and the first unique virtual machine identifier (VMID1) when, responsive to a virtual machine instantiation request, the first virtual machine (140₁) is instantiated within the virtual machine management server (130); and
creating an association among the unique application identifier (AppID1), the first unique virtual machine identifier (VMID1), and the second unique virtual machine identifier (VMID2) thereby creating an association between the application (150) configured in the application management server (110) and the first virtual machine (140₁) instantiated within the virtual machine management server (130);
by the application management server (110):
accessing the first virtual machine (140₁) by using the second unique virtual machine identifier (VMID2).

2. The method of claim 1, wherein the unique application identifier (AppID1) and the first unique virtual machine identifier (VMID1) are stored in metadata associated with the first virtual machine (140₁).

3. The method of claim 1, wherein the unique application identifier (AppID1) and the first unique virtual machine identifier (VMID1) are generated by a first software component executing on the application management server (110), and the second unique virtual machine identifier (VMID2) is generated by a second software component (120) executing in the virtual machine management server (130).

4. The method of claim 3, wherein the first software component executing on the application management server (110) comprises a first module that generates a deployment plan for the application and a second module that provides a selection of virtual machine templates for the application, and wherein the unique application identifier (AppID1) is generated by the first module.

5. The method of claim 4, wherein the association among the unique application identifier (AppID1), the first unique virtual machine identifier (VMID1), and the second unique virtual machine identifier (VMID2) are stored in a data structure (230) that is accessible to the second module of the application management server (110).

6. The method of claim 5, further comprising:
receiving, by the first software component executing on the application management server (110), a request to update software of the first virtual machine (140₁);
locating the first unique virtual machine identifier (VMID1) in the data structure (230) accessing the second unique virtual machine identifier (VMID2) based on the first unique virtual machine identifier (VMID1); and
transmitting the software update for the first virtual machine (140₁) using the second unique virtual machine identifier (VMID2).

7. The method of claim 3, further comprising:
receiving, by the second software component executing in the virtual machine management server (130), a request to scale the first virtual machine (140₁);
instantiating in the virtual machine management server (130) a second virtual machine (140₂) that is a scaled version of the first virtual machine (140₁);
generating, by the second software component executing in the virtual machine management server (130), a new unique virtual machine identifier (VMID2_b) which corresponds to the second virtual machine (140₂) and which is different to the second unique virtual machine identifier (VMID2)
associating the unique application identifier (AppID1) and the first unique virtual machine identifier (VMID1) with the new unique virtual machine identifier (VMID2_b); and
after associating the unique application identifier (AppID1) and the first unique virtual machine identifier (VMID1) with the new unique virtual machine identifier (VMID2_b), deallocating the first virtual machine (140i)

8. The method of claim 3, further comprising:
receiving, by the first software component executing in the application management server (110), a request to deploy a second virtual machine for the application;
generating a first unique virtual machine identifier (VMID1_b) for the second virtual machine instantiating the second virtual machine (140₂) in the virtual machine management server (130); generating a second unique virtual machine identifier (VMID2_b) for the second virtual machine (140₂) and
creating an association among the unique application identifier (AppID1), the first unique virtual machine identifier (VMID1_b) of the second virtual machine (140₂), and the second unique virtual machine identifier (VMID2_b) of the second virtual machine (140₂).

9. The method of claim 1, wherein the application management server (110) and the virtual machine management server (130) execute on the same physical server.

10. A non-transitory computer-readable medium comprising instructions executable by one or more hosts in a virtualized computing environment, where the instructions, when executed, cause the one or more hosts to perform a method as set out in any one of claims 1 to 9.

11. A computing system configured to perform the method of any of claims 1-9.

## Patentansprüche

1. Verfahren zum Einsetzen, mittels eines virtualisierten Rechensystems, das einen Verwaltungsserver (130) für virtuelle Maschinen und einen Anwendungsverwaltungsserver (110) aufweist, einer Anwendung (150) in einer Cloud-Rechenumgebung (100), die eine Vielzahl von virtuellen Maschinen (140₁-140ₙ) aufweist, die durch den Verwaltungsserver (130) für virtuelle Maschinen verwaltet werden, wobei die Anwendung (150) unter Verwendung einer Vielzahl der virtuellen Maschinen (140₁-140ₙ), die eine erste virtuelle Maschine (140₁) beinhalten, ausgeführt wird, das Verfahren aufweisend:
mittels des Anwendungsverwaltungsservers (110), in dem die Anwendung (150) vor dem Einsetzen modelliert wird:
Erzeugen eines eindeutigen Anwendungsidentifizierers (AppID1), der ein Identifizierer für die Anwendung (150) als Ganzes ist;
Erzeugen eines ersten eindeutigen virtuellen Maschinenidentifizierers (VMID1) für die erste virtuelle Maschine (140₁), wobei der erste eindeutige virtuelle Maschinenidentifizierer (VMID1) die erste virtuelle Maschine (140₁) als Teil der Anwendung (150) identifiziert;
Senden von Anweisungen an den Verwaltungsserver (130) für virtuelle Maschinen, um die Anwendung (150) einzusetzen;
mittels des Verwaltungsservers (130) für virtuelle Maschinen:
Empfangen der Anweisungen, um die Anwendung (150) einzusetzen; Instanziieren der ersten virtuellen Maschine (140₁) innerhalb des Verwaltungsservers für virtuelle Maschinen;
Erzeugen eines zweiten eindeutigen virtuellen Maschinenidentifizierers (VMID2) unabhängig von dem eindeutigen Anwendungsidentifizierer (AppID1) und dem ersten eindeutigen virtuellen Maschinenidentifizierer (VMID1), wenn als Reaktion auf eine Instanziierungsanforderung für virtuelle Maschinen die erste virtuelle Maschine (140₁) innerhalb des Verwaltungsservers (130) für virtuelle Maschinen instanziiert wird; und
Erzeugen einer Verknüpfung zwischen dem eindeutigen Anwendungsidentifizierer (AppID1), dem ersten eindeutigen virtuellen Maschinenidentifizierer (VMID1) und dem zweiten eindeutigen virtuellen Maschinenidentifizierer (VMID2), wodurch eine Verknüpfung zwischen der Anwendung (150), die in dem Anwendungsverwaltungsserver (110) konfiguriert ist, und der ersten virtuellen Maschine (140₁), die innerhalb des Verwaltungsservers für virtuelle Maschinen instanziiert wird, erzeugt wird,
mittels des Anwendungsverwaltungsservers (110):
Zugreifen auf die erste virtuelle Maschine (140₁) unter Verwendung des zweiten eindeutigen virtuellen Maschinenidentifizierers (VMID2).

2. Verfahren gemäß Anspruch 1, wobei der eindeutige Anwendungsidentifizierer (AppID1) und der erste eindeutige virtuelle Maschinenidentifizierer (VMID1) in Metadaten gespeichert sind, die mit der ersten virtuellen Maschine (140₁) verknüpft sind.

3. Verfahren gemäß Anspruch 1, wobei der eindeutige Anwendungsidentifizierer (AppID1) und der erste eindeutige virtuelle Maschinenidentifizierer (VMID1) durch eine erste Softwarekomponente erzeugt werden, die auf dem Anwendungsverwaltungsserver (110) ausgeführt wird, und der zweite eindeutige virtuelle Maschinenidentifizierer (VMID2) durch eine zweite Softwarekomponente (120) erzeugt wird, die in dem Verwaltungsserver (130) für virtuelle Maschinen ausgeführt wird.

4. Verfahren gemäß Anspruch 3, wobei die erste Softwarekomponente, die auf dem Anwendungsverwaltungsserver (110) ausgeführt wird, ein erstes Modul, das einen Einsatzplan für die Anwendung erzeugt, und ein zweites Modul, das eine Auswahl von Vorlagen für virtuelle Maschinen für die Anwendung bereitstellt, aufweist, und wobei der eindeutige Anwendungsidentifizierer (AppID1) durch das erste Modul erzeugt wird.

5. Verfahren gemäß Anspruch 4, wobei die Verknüpfung zwischen dem eindeutigen Anwendungsidentifizierer (AppID1), dem ersten eindeutigen virtuellen Maschinenidentifizierer (VMID1) und dem zweiten eindeutigen virtuellen Maschinenidentifizierer (VMID2) in einer Datenstruktur (230) gespeichert ist, die für das zweite Modul des Anwendungsverwaltungsservers (110) zugänglich ist.

6. Verfahren gemäß Anspruch 5, ferner aufweisend:
Empfangen, mittels der ersten Softwarekomponente, die auf dem Anwendungsverwaltungsserver (110) ausgeführt wird,
einer Anforderung zum Aktualisieren von Software der ersten virtuellen Maschine (140₁);
Lokalisieren des ersten eindeutigen virtuellen Maschinenidentifizierers (VMID1) in der Datenstruktur (230);
Zugreifen auf den zweiten eindeutigen virtuellen Maschinenidentifizierer (VMID2) basierend auf dem ersten eindeutigen virtuellen Maschinenidentifizierer (VMID1); und
Übertragen der Softwareaktualisierung für die erste virtuelle Maschine (140₁) unter Verwendung des zweiten eindeutigen virtuellen Maschinenidentifizierers (VMID2).

7. Verfahren gemäß Anspruch 3, ferner aufweisend:
Empfangen, mittels der zweiten Softwarekomponente, die in dem Verwaltungsserver (130) für virtuelle Maschinen ausgeführt wird, einer Anforderung zum Skalieren der ersten virtuellen Maschine (140₁);
Instanziieren, in dem Verwaltungsserver (130) für virtuelle Maschinen, einer zweiten virtuellen Maschine (140₂), die eine skalierte Version der ersten virtuellen Maschine (140₁) ist;
Erzeugen, mittels der zweiten Softwarekomponente, die in dem Verwaltungsserver (130) für virtuelle Maschinen ausgeführt wird, eines neuen eindeutigen virtuellen Maschinenidentifizierers (VMID2_b), der der zweiten virtuellen Maschine (140₂) entspricht und der sich von dem zweiten eindeutigen virtuellen Maschinenidentifizierer (VMID2) unterscheidet;
Zuordnen des eindeutigen Anwendungsidentifizierers (AppID1) und des ersten virtuellen Maschinenidentifizierers (VMID1) zu dem neuen virtuellen Maschinenidentifizierer (VMID2_b); und
nach dem Zuordnen des eindeutigen Anwendungsidentifizierers (AppID1) und des ersten eindeutigen virtuellen Maschinenidentifizierers (VMID1) zu dem neuen eindeutigen virtuellen Maschinenidentifizierer (VMID2_b), Aufheben der Zuweisung der ersten virtuellen Maschine (140₁).

8. Verfahren gemäß Anspruch 3, ferner aufweisend:
Empfangen, mittels der ersten Softwarekomponente, die in dem Anwendungsverwaltungsserver (110) ausgeführt wird, einer Anforderung zum Einsetzen einer zweiten virtuellen Maschine für die Anwendung;
Erzeugen eines ersten eindeutigen Maschinenidentifizierers (VMID1_b) für die zweite virtuelle Maschine;
Instanziieren der zweiten virtuellen Maschine (140₂) in dem Verwaltungsserver (130) für virtuelle Maschinen;
Erzeugen eines zweiten eindeutigen Maschinenidentifizierers (VMID2_b) für die zweite virtuelle Maschine (140₂);
und
Erzeugen einer Verknüpfung zwischen dem eindeutigen Anwendungsidentifizierer (AppID1), dem ersten eindeutigen Maschinenidentifizierer (VMID1_b) der zweiten virtuellen Maschine (140₂) und dem zweiten eindeutigen Maschinenidentifizierer (VMID2_b) der zweiten virtuellen Maschine (140₂).

9. Verfahren gemäß Anspruch 1, wobei der Anwendungsverwaltungsserver (110) und der Verwaltungsserver (130) für virtuelle Maschinen auf demselben physischen Server ausgeführt werden.

10. Nicht-transitorisches computerlesbares Medium, das Anweisungen aufweist, die durch einen oder mehrere Hosts in einer virtualisierten Rechenumgebung ausführbar sind, wobei die Anweisungen, wenn sie ausgeführt werden, den einen oder die mehreren Hosts dazu veranlassen, ein Verfahren auszuführen, wie es in einem beliebigen der Ansprüche 1 bis 9 beschrieben ist.

11. Ein Computersystem, das konfiguriert ist, um das Verfahren gemäß einem der Ansprüche 1 - 9 auszuführen.

## Revendications

1. Procédé de déploiement, par un système informatique virtualisé comprenant un serveur de gestion de machines virtuelles (130) et un serveur de gestion d'application (110), d'une application (150) dans un environnement informatique en nuage (100) comprenant une pluralité de machines virtuelles (140₁-140ₙ) gérées par le serveur de gestion de machines virtuelles (130), l'application (150) étant exécutée en utilisant une pluralité des machines virtuelles (140₁-140ₙ) incluant une première machine virtuelle (140₁), le procédé comprenant les étapes consistant à :
par l'intermédiaire du serveur de gestion d'application (110) dans lequel l'application (150) est modélisée avant un déploiement :
générer un identifiant d'application unique (AppID1) qui est un identifiant pour l'application (150) dans son ensemble ;
générer un premier identifiant de machine virtuelle unique (VMID1) pour la première machine virtuelle (140₁),
dans lequel le premier identifiant de machine virtuelle unique (VMID1) identifie la première machine virtuelle (140₁) comme faisant partie de l'application (150) ;
envoyer des instructions au serveur de gestion de machines virtuelles (130) pour déployer l'application (150) ;
par l'intermédiaire du serveur de gestion de machines virtuelles (130) :
recevoir les instructions pour déployer l'application (150) ;
instancier la première machine virtuelle (140₁) dans le serveur de gestion de machines virtuelles (130) ;
générer un second identifiant de machine virtuelle unique (VMID2) indépendamment de l'identifiant d'application unique (AppID1) et du premier identifiant de machine virtuelle unique (VMID1) lorsqu'en réponse à une demande d'instanciation de machine virtuelle, la première machine virtuelle (140₁) est instanciée dans le serveur de gestion de machines virtuelles (130) ; et
créer une association entre l'identifiant d'application unique (AppID1), le premier identifiant de machine virtuelle unique (VMID1) et le second identifiant de machine virtuelle unique (VMID2), en créant ainsi une association entre l'application (150) configurée dans le serveur de gestion d'application (110) et la première machine virtuelle (140₁) instanciée dans le serveur de gestion de machines virtuelles (130) ;
par l'intermédiaire du serveur de gestion d'application (110) :
accéder à la première machine virtuelle (140₁) en utilisant le second identifiant de machine virtuelle unique (VMID2).

2. Procédé selon la revendication 1, dans lequel l'identifiant d'application unique (AppID1) et le premier identifiant de machine virtuelle unique (VMID1) sont stockés dans des métadonnées associées à la première machine virtuelle (140₁).

3. Procédé selon la revendication 1, dans lequel l'identifiant d'application unique (AppID1) et le premier identifiant de machine virtuelle unique (VMID1) sont générés par un premier composant de logiciel s'exécutant sur le serveur de gestion d'application (110), et le second identifiant de machine virtuelle unique (VMID2) est généré par un second composant de logiciel (120) s'exécutant dans le serveur de gestion de machines virtuelles (130).

4. Procédé selon la revendication 3, dans lequel le premier composant de logiciel s'exécutant sur le serveur de gestion d'application (110) comprend un premier module qui génère un plan de déploiement pour l'application et un second module qui fournit une sélection de modèles de machine virtuelle pour l'application, et dans lequel l'identifiant d'application unique (AppID1) est généré par le premier module.

5. Procédé selon la revendication 4, dans lequel l'association entre l'identifiant d'application unique (AppID1), le premier identifiant de machine virtuelle unique (VMID1) et le second identifiant de machine virtuelle unique (VMID2) est stockée dans une structure de données (230) qui est accessible au second module du serveur de gestion d'application (110).

6. Procédé selon la revendication 5, comprenant en outre les étapes consistant à :
recevoir, par l'intermédiaire du premier composant de logiciel s'exécutant sur le serveur de gestion d'applications (110), une demande de mise à jour du logiciel de la première machine virtuelle (140₁) ;
localiser le premier identifiant de machine virtuelle unique (VMID1) dans la structure de données (230) ;
accéder au second identifiant de machine virtuelle unique (VMID2) sur la base du premier identifiant de machine virtuelle unique (VMID1) ; et
transmettre la mise à jour de logiciel pour la première machine virtuelle (140₁) en utilisant le second identifiant de machine virtuelle unique (VMID2).

7. Procédé selon la revendication 3, comprenant en outre les étapes consistant à :
recevoir, par l'intermédiaire du second composant de logiciel s'exécutant dans le serveur de gestion de machines virtuelles (130), une demande de mise à l'échelle de la première machine virtuelle (140₁) ;
instancier dans le serveur de gestion de machines virtuelles (130) une seconde machine virtuelle (140₂) qui est une version mise à l'échelle de la première machine virtuelle (140₁) ;
générer, par l'intermédiaire du second composant de logiciel s'exécutant dans le serveur de gestion de machines virtuelles (130), un nouvel identifiant de machine virtuelle unique (VMID2_b) qui correspond à la seconde machine virtuelle (140₂) et qui est différent du second identifiant de machine virtuelle unique (VMID2) ;
associer l'identifiant d'application unique (AppID1) et le premier identifiant de machine virtuelle unique (VMID1) au nouvel identifiant de machine virtuelle unique (VMID2_b) ; et
après association de l'identifiant d'application unique (AppID1) et du premier identifiant de machine virtuelle unique (VMID1) avec le nouvel identifiant de machine virtuelle unique (VMID2_b), désallouer la première machine virtuelle (140₁).

8. Procédé selon la revendication 3, comprenant en outre les étapes consistant à :
recevoir, par l'intermédiaire du premier composant de logiciel s'exécutant dans le serveur de gestion d'application (110), une demande de déploiement d'une seconde machine virtuelle pour l'application ;
générer un premier identifiant de machine virtuelle unique (VMID1_b) pour la seconde machine virtuelle ;
instancier la seconde machine virtuelle (140₂) dans le serveur de gestion de machines virtuelles (130) ;
générer un second identifiant de machine virtuelle unique (VMID2_b) pour la seconde machine virtuelle (140₂) ; et
créer une association entre l'identifiant d'application unique (AppID1), le premier identifiant de machine virtuelle unique (VMID1_b) de la seconde machine virtuelle (140₂), et le second identifiant de machine virtuelle unique (VMID2_b) de la seconde machine virtuelle (140₂).

9. Procédé selon la revendication 1, dans lequel le serveur de gestion d'application (110) et le serveur de gestion de machines virtuelles (130) s'exécutent sur le même serveur physique.

10. Support lisible par ordinateur non transitoire comprenant des instructions exécutables par un ou plusieurs hôtes dans un environnement informatique virtualisé, où les instructions, lorsqu'elles sont exécutées, amènent les un ou plusieurs hôtes à exécuter un procédé selon l'une quelconque des revendications 1 à 9.

11. Système informatique configuré pour exécuter le procédé selon l'une quelconque des revendications 1 à 9.
